# EUROPÄISCHE PATENTSCHRIFT

(11) **EP 1 482 323 B1**
(45) Veröffentlichungstag und Bekanntmachung des Hinweises auf die Patenterteilung: **16.03.2011**
(21) Anmeldenummer: 04012514.8
(22) Anmeldetag: 27.05.2004
(51) Int. Cl.: G01S 5/30, G01S 5/00

(54) **Verfahren und System zur Identifikation und Ortsbestimmung von Objekten**
Method and system for identification and location of objects
Procédé et dispositif d'identification et de localisation d'objets

(30) Priorität: 30.05.2003 DE 10324651
(43) Veröffentlichungstag der Anmeldung: 01.12.2004
(73) Patentinhaber: Identec Solutions AG, 6890 Lustenau (AT)
(72) Erfinder: Gantner, Reinhold, 6700 - Bludenz (DE)
(74) Vertreter: Riebling, Peter

(56) Entgegenhaltungen:
- US-A- 5 214 615
- US-A- 5 412 619
- US-A- 6 141 293
- US-B1- 6 292 106
- US-B1- 6 348 856

## Beschreibung

Die Erfindung betrifft ein Verfahren zur Identifikation und Ortsbestimmung von Objekten in einem begrenzten Areal, insbesondere im Innenbereich, wie z.B. innerhalb von Gebäuden.

Es ist allgemein bekannt, das sogenannte GPS (Global Positioning System) zur Ortsbestimmung von Personen und Objekten zu verwenden. Weltweit werden Empfänger, die das GPS-Signal auswerten, z.B. im Flugverkehr oder in der Automobilindustrie eingesetzt. Die erreichbare Ortsauflösung liegt je nach Anwendung und Empfängersystem im Bereich von einigen Metern bis einigen 10 Metern, was für die Ortsbestimmung im Außenbereich ausreichend ist.
Ein Nachteil des GPS-Systems und allgemein von Satelliten gestützten Systemen besteht darin, dass diese nicht für die hochgenaue Ortsbestimmung im Innenbereich, wie z.B. in Gebäuden, oder im Außenbereich in von den Satelliten abgeschatteten Bereichen, wie z.B. Gebäudeschluchten, verwendet werden können. Eine Identifikation von Objekten ist mit diesen Systemen ebenso nicht möglich.

Auf dem Gebiet der Ortsbestimmung im Innenbereich sind Verfahren bekannt, die auf Transponder-Technologien basieren, und für Logistikzwecke und die Nahbereichsidentifikation eingesetzt. Die Ortung durch Entfernungsmessungen ist das hier am meisten angewandte Verfahren. Dabei erfolgt die Ortung durch eine Laufzeitmessung von Funk-, Infrarot-, Ultraschall- oder Laser-Signalen. Genauere Systeme setzen auch modulierte Signale ein, um mittels einer geeigneten Signalverarbeitung eine höhere Auflösung zu erzielen. Andere Verfahren, wie Feldstärkemessungen oder die Auswertung des empfangenen Signalwinkels bei komplexeren Basisstationen, die mit phasengesteuerten Antennenanordnungen ausgerüstet sind, werden meistens zusätzlich zur Entfernungsmessung eingesetzt.

Ein Problem der Innenbereichs-Ortungssysteme aber auch der Außenbereichs-Ortungssysteme, z. B. in abgeschatteten Gebäudebereichen, besteht darin, dass im Innenbereich, z. B. in Gebäuden, eine hohe Signaldynamik und Mehrwegsignale auftreten, die z.B. durch Reflexionen der Navigationssignale innerhalb der Gebäude entstehen. Diese Mehrwegsignale verzerren sehr stark den Übertragungskanal und erschweren eine zuverlässige Ortung bzw. Bestimmung der Position eines Objekts. Insbesondere eine quasi gleichzeitige Ortung von mehreren Objekten ist dadurch problematisch.

Die US 6292106 B1 bezieht sich auf ein akustisches System und Verfahren zur gleichzeitigen Ortung und Verfolgung mehrerer Personen in Räumen eines Bauwerks, wobei bereits alle Merkmale des Oberbegriffs des unabhängigen Patentanspruches 1 offenbart sind.

Die Aufgabe der vorliegenden Erfindung besteht darin, ein Verfahren zur Identifikation und Ortsbestimmung von Objekten anzugeben, die eine einfache, zuverlässige und genaue Bestimmung der Position von insbesondere mehreren Objekten gestattet,

Diese Aufgabe wird erfindungsgemäß durch die Merkmale des unabhängigen Patentanspruches 1 gelöst.

Bevorzugte Ausgestaltungen und Weiterbildungen der Erfindung sind durch die Merkmale der abhängigen Patentansprüche beschrieben.

Das Verfahren beruht im wesentlichen darauf, dass Ultraschallsignale von einem oder mehreren in einem Überwachungsgebiet ortsfest angeordneten US-Sendern abgestrahlt werden und in einem im/am zu ortenden Objekt angeordneten Empfänger empfangen werden, wobei die Empfangszeit registriert wird. Aus dem Sende- und Empfangszeitpunkt jedes Ultraschallsignals, welcher bekannt ist bzw. ermittelt wird, wird nun die Laufzeit jedes Signals und damit der Abstand zwischen dem jeweiligen US-Sender und dem US-Empfänger ermittelt.

Die ermittelten Laufzeiten werden über ein drahtloses Kommunikationssystem vom US-Empfänger an eine zentrale Steuerungseinrichtung übertragen. In der Steuerungseinrichtung kann mit Hilfe bekannter Methoden anhand von mindestens drei Laufzeiten und den bekannten Positionen der zugehörigen US-Sender der Standort des US-Empfängers und damit des Objekts ermittelt werden.

In einer bevorzugten Ausgestaltung der Erfindung werden die Laufzeiten der einzelnen Ultraschallsignale und/oder die den Laufzeiten entsprechenden Entfernungen bereits in der objektzugeordneten Komponente ermittelt und über das Kommunikationssystem an die zentrale Komponente übertragen.

Vorzugsweise werden die Sendezeitpunkte für die Ultraschallsignale der einzelnen US-Sender durch die zentrale Komponente gesteuert, wobei die zentrale Komponente und die dem Objekt zugeordnete Komponente jeweils eine Zeitbasis aufweisen, die laufend miteinander synchronisiert werden. Dabei erfolgt die Synchronisation der Zeitbasen vorzugsweise über das drahtlose Kommunikationssystem.
Es kann auch vorgesehen sein, dass gleichzeitig mit dem US-Signalen ein Funksignal von einem der ortsfesten Funksender/-Empfänger ausgesendet wird, wobei durch den Empfang des Funksignals in der objektbezogenen Komponente die Laufzeitmessung für die ausgesendeten US-Signale gestartet wird.

In einer vorteilhaften Ausgestaltung der Erfindung erfolgt das Aussenden der Ultraschallsignale in einem sich ständig wiederholenden Zyklus, wobei der Zyklus in mehrere Zeitfenster unterteilt ist, und jedem US-Sender ein Zeitfenster zugeordnet ist, innerhalb dessen er sein Ultraschallsignal aussendet.

Auch die Synchronisation der Zeitbasen kann innerhalb eines solchen bestimmten Zeitfensters erfolgen.

Durch die Anwendung eines Zeitmultiplexverfahrens können die vom US-Empfänger empfangenen Ultraschallsignale anhand des zum jeweiligen Empfangszeitpunkt geltenden Zeitfensters genau einem US-Sender zugeordnet werden.
Zur Unterdrückung von Störungen durch Mehrfachausbreitung und Reflexionen der US-Signale wird vom US-Empfänger nur das innerhalb eines Zeitfensters zuerst empfangene Ultraschallsignal ausgewertet.

In der Ausgestaltung der Erfindung sind die US-Sender in zwei oder mehrere Gruppen eingeteilt, wobei alle US-Sender einer Gruppe auf einer bestimmten Sendefrequenz senden. Damit die US-Sender jeder Gruppe unterscheidbar sind, wird für jede Gruppe eine von der benachbarten Gruppe unterschiedliche Sendefrequenz für die US-Sender verwendet.
Die US-Sender einer Gruppe senden nie gleichzeitig.

Als drahtloses Kommunikationssystem wird ein Funkkommunikationssystem verwendet, wobei zwischen einem in der objektbezogenen Komponente angeordneten Funksender-/Empfänger und einem mit der zentralen Komponente verbundenen Funksender-/Empfänger Funksignale ausgetauscht werden.
Auch hier kann der Austausch von Funksignalen vorteilhaft innerhalb eines oder mehreren definierten Zeitfenstern erfolgen.

Zur groben Ortsbestimmung einer objektbezogenen Komponenten wird seitens der zentralen Komponente die Empfangsfeldstärke der von den objektbezogenen Funksendem empfangenen Funksignale ermittelt.

Ein System zur Durchführung des Verfahrens zur Ortsbestimmung von Objekten innerhalb eines begrenzten Areals ist gekennzeichnet durch eine zentrale Komponente, welche im wesentlichen eine Datenverarbeitungseinrichtung, eine Zeitbasis und mindestens eine drahtlose Kommunikationseinrichtung umfasst. Die zentrale Komponente ist mit mindestens drei innerhalb des Areals ortsfest angeordnete Ultraschallsendern verbunden.
Eine jeweils in / an jedem Objekt angeordnete Komponente umfasst im wesentlichen mindestens einen Ultraschallempfänger, eine Datenverarbeitungseinheit, eine Zeitbasis und eine drahtlose Kommunikationseinrichtung.

Die US-Sender sind in Gruppen eingeteilt, wobei den Gruppen verschiedenen Sendefrequenzen zugeordnet sind.

Die drahtlose Kommunikationseinrichtung ist eine Funkkommunikationseinrichtung.

Die Vorteile der Erfindung gegenüber bekannten Ortungssystemen liegen auf der Hand.

Aufgrund des verwendeten Zeitmultiplex-Verfahrens bei der Aussendung der Ultraschallsignale ist generell keine Codierung der US-Signale notwendig, da jedes empfangene US-Signal und damit der zugehörige US-Sender genau einem Zeitfenster zugeordnet werden kann. Dies setzt voraus, dass die Länge des Zeitfensters größer ist als die maximale Laufzeit der US-Signale, die durch die Reichweite der US-Signale begrenzt wird.
Da keine Codierung der gesendeten Signale notwendig ist, können sowohl die US-Sender als auch die US-Empfänger sehr einfach aufgebaut werden.

Folglich ist in der objektseitigen Komponente keine aufwändige Datenerfassung und Verarbeitung notwendig. Es werden lediglich die Laufzeiten der empfangenen US-Signale bzw. eine der Laufzeit entsprechende Entfernung berechnet und an eine zentrale Komponente übertragen, die dann die notwendigen weiteren Auswertungen und Berechnungen durchführt. Erfindungsgemäß ist somit eine quasi gleichzeitige Ortsbestimmung von vielen Objekten ohne gegenseitige Beeinflussung möglich.

Ein weiterer Vorteil der vorliegenden Erfindung besteht darin, dass bei Anwendungen, bei denen keine oder eine eingeschränkte Sichtverbindung zu den Sendern des Systems zur Bestimmung der Position eines Objekts besteht, also bei Anwendungen im Innenbereich, wie z.B. Gebäuden, bei denen zwangsläufig eine hohe Signaldynamik und Mehrwegsignale, die den Übertragungssignal stark verzerren, auftreten, eine hohe Ortungszuverlässigkeit eines Objekts, eine dreidimensionale Ortung und eine Ortung mit einem System ermöglicht, das unempfindlich gegenüber Störsignalen ist.

Generell ist anstelle des verwendeten Zeitmultiplexverfahrens der US-Signale ein Frequenzmultiplex- oder Codemultiplexverfahren denkbar. Diese Verfahren sind jedoch im Vergleich zum Zeitmultiplex technisch recht aufwändig was den Aufbau der US-Sender und US-Empfänger betrifft. Ein Codemultiplex erfordert eine sehr aufwändige Datenverarbeitung und Modulation der US-Signale.

Ein Ausführungsbeispiel der Erfindung wird im folgenden anhand der Zeichnungsfiguren näher erläutert. Aus den Zeichnung und deren Beschreibung ergeben sich weitere Merkmale, Vorteile und Anwendungsmöglichkeiten der Erfindung.
Figur 1 zeigt eine mögliche Anordnung der Komponenten zur Durchführung des erfindungsgemäßen Verfahrens;
Figur 2 zeigt das Prinzip des angewandten Zeitmultiplexverfahrens;
Figur 3 zeigt ein praktisches Beispiel des Zeitmultiplexverfahrens gemäß der Erfindung.

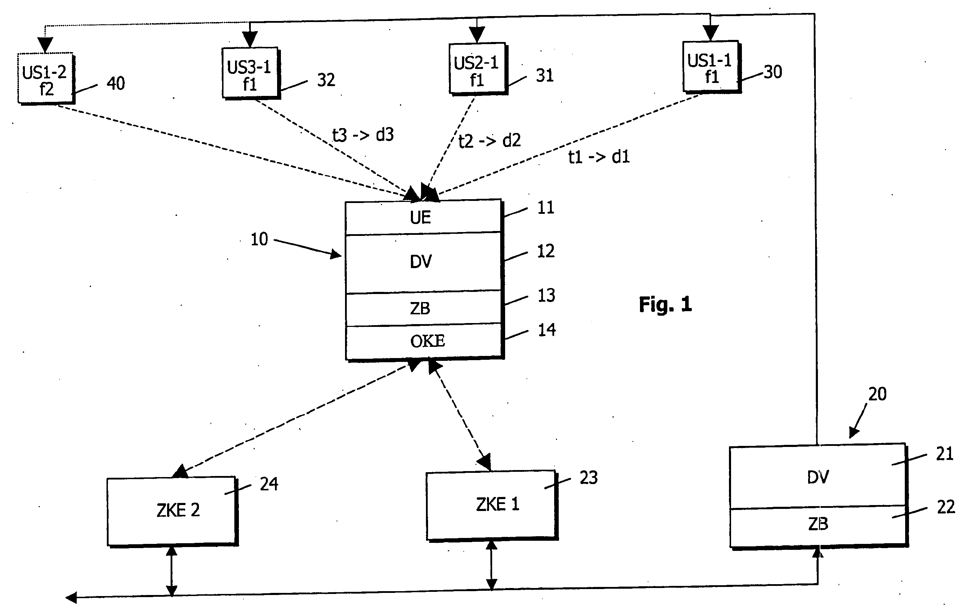

Der Zweck des erfindungsgemäßen Verfahrens ist es, eine Vielzahl von innerhalb eines begrenzten Areal befindlichen Objekten zu identifizieren und zu orten.
Wie in Figur 1 dargestellt ist, ist jedem Objekt eine objektbezogene elektronische Komponente 10, ein sogenanntes elektronisches TAG, zugeordnet, das fest mit dem Objekt verbunden ist. Jede Komponente 10 umfasst eine Datenverarbeitungseinrichtung 12 mit einem Datenspeicher, in dem Angaben über und zur Identifikation des Objekts gespeichert sind. Ferner umfasst die Komponente 10 eine Zeitbasis 13 , einen Ultraschallempfänger 11 zum Empfang von Ultraschallsignalen sowie eine drahtlose Kommunikationseinrichtung 14, in Form einer Funkkommunikationseinrichtung, zum Senden und Empfangen von Funksignalen.

Des weiteren umfasst das System eine zentrale Komponente 20, die eine Datenverarbeitungseinrichtung 21 und eine Zeitbasis 22 umfasst und mit einer oder mehreren stationären, drahtlosen Kommunikationseinrichtungen 23, 24, in Form von Funkkommunikationseinrichtungen, verbunden ist und über diese Funksignale empfangen und aussenden kann.

Es sind eine Vielzahl von stationären Ultraschallsendern 30, 31, 32, 40 vorgesehen, die mit der zentralen Komponente 1 verbunden sind und von dieser gesteuert werden. Die US-Sender 30-32, 40 sind über ein mit US-Signalen zu überdeckendes Areal verteilt angeordnet, wobei deren Position der zentralen Komponenten 20 genau bekannt ist. Die US-Sender 30-32, 40 sind in Gruppen eingeteilt. Jede Gruppe umfasst mindestens drei US-Sender, z.B. US1-1, US2-1, US3-1, die auf einer ersten US-Frequenz f1 senden. Eine benachbarte Gruppe umfasst ebenfalls mehrere US-Sender, z.B. US2-1,..., etc, die auf einer zweiten US-Frequenz f2 senden.

Die Ortung der objektbezogenen Komponente 10 und damit des Objekts selbst erfolgt mittels einer Laufzeitmessung der von den US-Sendern 30-32, 40 abgestrahlten US-Signale zur Bestimmung der Entfernung zwischen dem an dem zu ortenden Objekt angebrachten US-Empfänger und den auf festen Positionen angebrachten US- Sendern 30-32, 40.

Zur Groblokalisierung und /oder zusätzlichen Überprüfung des Ortungsergebnisses wird eine Feldstärkemessung vorgenommen. Dabei wird an den Funkempfängern 23, 24 die Feldstärke des von dem am ortenden Objekt angebrachten Funksenders 14 abgestrahlten Funksignals gemessen. Je größer die Feldstärke, desto näher ist das Objekt an dem entsprechenden Funkempfänger 23, 24.

Mittels einer Frequenzmessung der im objektbezogenen US-Empfänger 11 empfangenen US- Signal wird zusätzlich eine Unterscheidung zwischen benachbarten Gruppen von US- Sendern (Clustern) vorgenommen.

Erfindungsgemäß werden die Laufzeiten t1, t2, t3 der Ultraschallsignale von den einzelnen ortsfesten US-Sendern 30-32, 40 zum US-Empfänger 11 der objektbezogenen Komponente 10 gemessen. Jede Laufzeit kann aufgrund der bekannten Schallgeschwindigkeit (in Luft bei Raumtemperatur ca. 344 m/s) einer bestimmten Entfernung d1, d2, d3 zwischen dem US-Sender und dem US-Empfänger zugeordnet werden.

Die ermittelten Laufzeiten t1, t2, t3 werden über das Funkkommunikationssystem 14 und 23 bzw. 24 von der objektbezogenen Komponente 10 an die zentrale Komponente 20 übertragen und dort mit Hilfe der bekannten Beziehung d = t · c, wobei c = Schallgeschwindigkeit, in dazu proportionale Entfernungen d1, d2, d3 umgesetzt. Alternativ können die Entfernungen d1, d2, d3 erfindungsgemäß auch bereits in der objektbezogenen Komponente 10 berechnet und an die zentrale Komponente 20 übertragen werden.

Aus diesen Entfernungswerten d1, d2, d3 lässt sich mittels bekannter geometrischer Verfahren die relative Position des objektbezogenen US-Empfängers 11 zu den US-Sendern 30-32, 40 und - falls die absolute Position der US-Sender bekannt ist - die absolute Position des US-Empfängers 11 und damit des Objekts bestimmen.

Die übergeordnete zentrale Komponente 20 koordiniert also die US- Sender 30-32, 40, synchronisiert die Zeitbasen 13 auf den objektbezogenen Komponenten und steuert die Kommunikation zwischen den objektbezogenen Komponenten 10 und der zentralen Komponente 20 über das drahtlose Kommunikationssystem 14, 23,24.

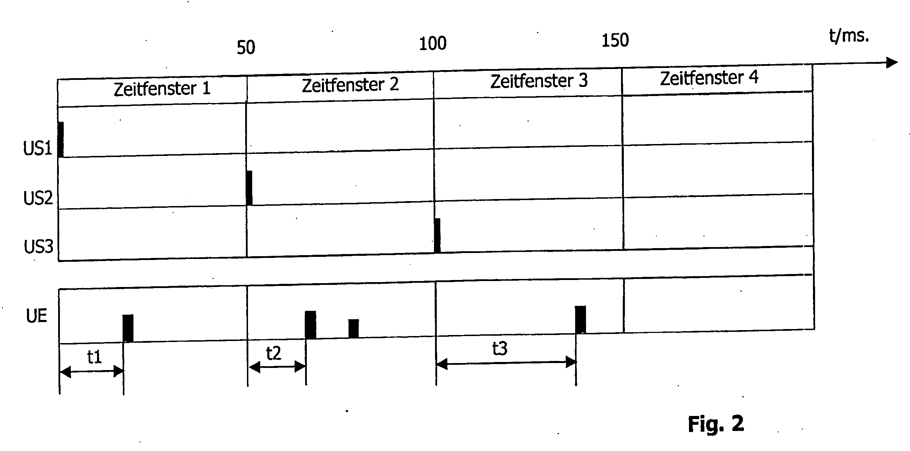

In Figur 2 ist dargestellt, dass die Zuordnung eines im US-Empfänger 11 empfangenen US-Signals zu einem bestimmten US-Sender 30-32, 40 durch ein Zeitschlitzverfahren erfolgt.
Jeder US-Sender US1, US2, US3 sendet sein Signal zu Beginn eines festgelegten Zeitfensters aus. Der jeweiligen Sendezeitpunkt der US-Signale wird von der zentralen Komponente gesteuert. Zum Beispiel sendet US1 im Zeitfenster 1, US2 im Zeitfenster 2, usw. Die US-Signale der US-Sender US1, US2, US3 werden im US-Empfänger UE empfangen. Hierbei sind die Zeitbasen 13 der objektbezogenen Komponenten und der zentralen Komponente 22 miteinander synchronisiert. Dies erfolgt durch den Austausch eines Synchronisierungsprotokolls über das Funkkommunikationssystem. Die US-Signale werden im US-Empfänger der objektbezogenen Komponente 10 empfangen. Dort werden aus der Empfangszeit und dem durch die Zeitfenster vorgegebenen Zeitrahmen die Laufzeiten der in den jeweiligen Zeitfenstern empfangenen US-Signale berechnet und in einem zu versendenden Broadcast-Telegramm abgespeichert. Somit kann jedes im US-Empfänger empfangene US-Signal anhand des gerade aktuellen Zeitfensters genau einem US-Sender zugeordnet werden. In einem dafür vorgesehenen Zeitfenster werden die abgespeicherten Broadcast-Telegramme von der objektbezogenen Komponenten 10 and die zentrale Komponente gesendet.

Im US-Empfänger wird pro Zeitschlitz jeweils nur das zuerst empfangene US-Signal, d.h. das Signal mit der kürzesten Laufzeit, ausgewertet. Aus der Länge eines Zeitschlitzes ergibt sich der maximal mögliche Abstand zwischen US-Empfänger am Objekt und US- Sender. Die maximale Reichweite der US-Sender beträgt ca. 10-15 m. Die Auflösung der verwendeten Zeitbasen 13, 22 und ihre Synchronie bestimmt die Genauigkeit der Abstandsmessung und damit die Präzision der Lokalisierung. Bei der Ortsbestimmung sind Genauigkeiten im Bereich von einigen Zentimetern erreichbar.

Die Anzahl der Zeitschlitze bestimmt die maximale Anzahl der möglichen US-Sender innerhalb der US- Reichweite und begrenzt damit die zeitliche Auflösung der Ortsbestimmung, das heißt die kürzeste Zeit zwischen zwei aufeinander folgenden Ortsbestimmungen eines bestimmten Objekts.

Zur flächenmäßigen Abdeckung eines größeren Areals werden mehrere Sender/Empfänger des drahtlosen Kommunikationssystems und mehrere US-Sender kombiniert. Dabei wird die Zuordnung der objektbezogenen Komponente 10 zu den jeweiligen Sende-/Empfangsstationen 23, 24 des Kommunikationssystems mittels der Feldstärke der empfangenen HF-Signale vorgenommen.

Durch den gleichzeitigen Empfang des eine Funksignals der Komponente 10 durch beide Kommunikationseinrichtungen 23 und 24 und die Auswertung der jeweiligen Feldstärke kann die zentrale Komponente ermitteln, welcher Gruppe von US-Sendern das Objekt am nächsten liegt. Befindet sich das Objekt genau an der Grenze zwischen zwei Gruppen von US-Sendern können die erfassten Laufzeiten t1, t2 und t3 von US-Sendern unterschiedlicher Gruppen stammen. Da die US-Sender benachbarter Gruppen mit verschiedener Frequenz f1 bzw. f2 senden, kann durch die Auswertung der Frequenz leicht ermittelt werden, von welcher Gruppe das einzelne US-Signal stammt.

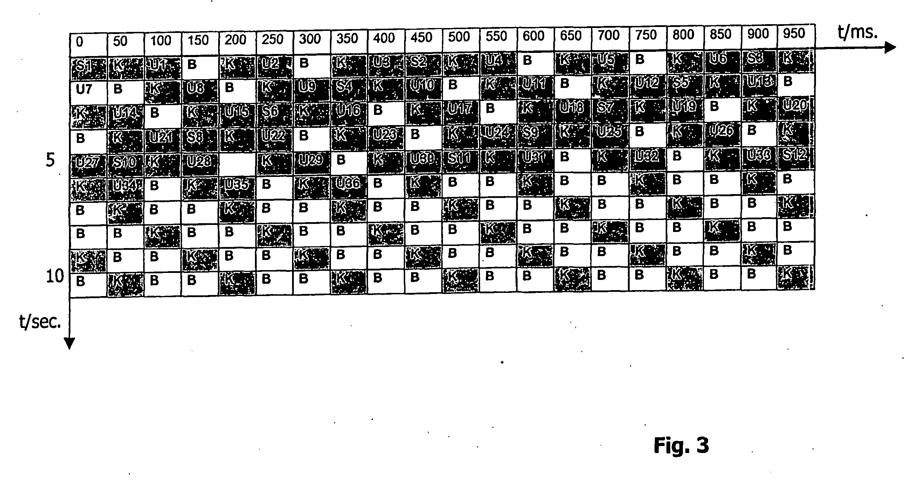

Figur 3 zeigt ein praktisches Beispiel des Zeitmultiplexverfahrens gemäß der Erfindung. Nach rechts ist die Zeit von 0 bis 1 s in Schritten von 50 ms dargestellt. Nach unten ist die Zeit von 0 bis 12 s in Schritten von 1 s dargestellt.
Ein Zyklus des Zeitmultiplexverfahrens dauert in diesem Beispiel 10 s. Der Zyklus ist in 200 Zeitfenster von jeweils 50 ms Länge aufgeteilt. Erfindungsgemäß sind Zeit-Synchronisationsfenster S1...Sx vorgesehen, in welchen eine Datenübertragung zwischen der zentralen Komponente 20 und der objektbezogenen Komponente 10 zur Synchronisation deren Zeitbasis 13 erfolgt. Des weiteren sind Ultraschall-Sende- und Empfangsfenster U1...Uy vorgesehen, in denen das Aussenden und Empfangen der US-Signale erfolgt. Jeder US-Sender sendet nur in einem Zeitfenster Uy eines Zyklus.
In den Kommunikationsfenstern erfolgt die Funkkommunikation zwischen der zentralen Komponente 20 und einer oder mehreren bestimmten objektbezogenen Komponenten10.
Schließlich sind eine Reihe von Broadcastfenster B vorgesehen, in welchen Ortungsnachrichten, welche die Ultraschall-Laufzeiten- bzw. Distanzwerte enthalten, über das Funkkommunikationssystem von den objektbezogenen Komponenten 10 zur zentralen Komponente übermittelt werden. Jede objektbezogene Komponente sendet sein Ortungstelegramm z.B. drei mal in zufällig ausgewählten Broadcastfenstern, z.B. nach dem slotted-ALOHA-Verfahren.
Die einzelnen Zeit-Synchronisationsfenster, Ultraschall-Sende- und Empfangsfenster, Kommunikationsfenster und Broadcastfenster treten innerhalb eines Zyklus in einer in Figur 3 dargestellten Reihenfolge auf. In dem gezeigten Beispiel sind insgesamt 36 US-Sender vorgesehen, die jeweils in einem der 36 Ultraschall-Sende- und Empfangsfenster U1...U36 senden.

## Patentansprüche

1. Verfahren zur Identifikation und Ortsbestimmung von Objekten innerhalb eines begrenzten Areals,
wobei von mindestens einem innerhalb des Areals ortsfest angeordneten Ultraschallsendern (30-32) ein Ultraschallsignal jeweils zu einem vorgegebenen Sendezeitpunkt ausgesendet wird,
wobei das ausgesendete Ultraschallsignal von einem Ultraschallempfänger (11) einer im/am Objekt angeordneten Komponente (10) empfangen wird,
wobei in der objektbezogenen Komponente (10) dem empfangenen Ultraschallsignal ein Empfangszeitpunkt zugeordnet wird,
wobei der ermittelte Empfangszeitpunkt zusammen mit einem Identifikationsmerkmal des Objekts über ein drahtloses Kommunikationssystem (14; 23; 24) an eine zentrale Komponente (20) übertragen wird,
wobei als drahtloses Kommunikationssystem ein Funkkommunikationssystem verwendet wird, wobei zwischen einem in der objektbezogenen Komponente angeordneten Funksender-/Empfänger (14) und einem mit der zentralen Komponente verbundenen ortsfesten Funksender-/Empfänger (23,24) Funksignale ausgetauscht werden,
wobei in der Objektbezogenen Komponente (10) und/oder in der zentralen Komponente (20) aus dem Sendezeitpunkt und dem zugeordneten Empfangszeitpunkt die Laufzeit des Ultraschallsignals ermittelt wird,
wobei aus der Laufzeit des Ultraschallsignals die Entfernung zwischen dem US-Sender und dem US-Empfänger des Objekts ermittelt wird,
wobei aus den ermittelten Entfernungen mit Hilfe bekannter Methoden die Position des US-Empfängers (11) und damit des Objekts ermittelt wird,
wobei die US-Sender in zwei oder mehrere Gruppen eingeteilt sind, wobei alle US-Sender einer Gruppe auf einer bestimmten Sendefrequenz (f1; f2) senden,
**dadurch gekennzeichnet, dass** zur groben Ortsbestimmung einer objektbezogenen Komponente seitens der zentralen Komponente die Empfangsfeldstärke der von den objektbezogenen Funksendem empfangenen Funksignale ermittelt wird und dass für jede Gruppe eine von der benachbarten Gruppe unterschiedliche Sendefrequenz für die US-Sender verwendet wird und dass mittels einer Frequenzmessung der im objektbezogenen US-Empfänger (11) empfangenen US-Signale zusätzlich eine Unterscheidung zwischen benachbarten Gruppen von US-Sendern vorgenommen wird.

2. Verfahren nach Anspruch 1, **dadurch gekennzeichnet, dass** von mehreren innerhalb des Areals ortsfest angeordneten Ultraschallsendern (30-32) ein Ultraschallsignal jeweils zu einem vorgegebenen Sendezeitpunkt ausgesendet wird, und eine zwei- oder dreidimensionale Ortsbestimmung des Objekts durchgeführt wird.

3. Verfahren nach einem der Ansprüche 1 oder 2, **dadurch gekennzeichnet, dass** die Sendezeitpunkte für die Ultraschallsignale der einzelnen US-Sender (30-32) durch die zentrale Komponente (20) gesteuert werden.

4. Verfahren nach einem der Ansprüche 1 bis 3, **dadurch gekennzeichnet, dass** gleichzeitig mit dem US-Signalen ein Funksignal von einem der ortsfesten Funksender/-Empfänger ausgesendet wird, wobei durch den Empfang des Funksignals in der objektbezogenen Komponente die Laufzeitmessung für die ausgesendeten US-Signale gestartet wird.

5. Verfahren nach einem der Ansprüche 1 bis 4, **dadurch gekennzeichnet, dass** die zentrale Komponente und die dem Objekbezogene Komponente jeweils eine Zeitbasis (22; 13) aufweisen, die laufend miteinander synchronisiert werden.

6. Verfahren nach Anspruch 5, **dadurch gekennzeichnet, dass** die Synchronisation der Zeitbasen (22; 13) über das drahtlose Kommunikationssystem erfolgt.

7. Verfahren nach einem der Ansprüche 5 oder 6, **dadurch gekennzeichnet, dass** das Aussenden der Ultraschallsignale in einem sich ständig wiederholenden Zyklus erfolgt, wobei der Zyklus in mehrere Zeitfenster unterteilt ist, und jedem US-Sender ein Zeitfenster zugeordnet ist, innerhalb dessen er sein Ultraschallsignal aussendet.

8. Verfahren nach einem der Ansprüche 5 bis 7, **dadurch gekennzeichnet, dass** die Synchronisation der Zeitbasen innerhalb eines bestimmten Zeitfensters erfolgt.

9. Verfahren nach einem der Ansprüche 5 bis 8, **dadurch gekennzeichnet, dass** die vom US-Empfänger empfangenen Ultraschallsignale anhand des zum Empfangszeitpunkt geltenden Zeitfensters dem jeweiligen US-Sender zugeordnet werden.

10. Verfahren nach einem der Ansprüche 5 bis 9, **dadurch gekennzeichnet, dass** vom US-Empfänger nur das innerhalb eines Zeitfensters zuerst empfangene Ultraschallsignal ausgewertet wird.

11. Verfahren nach einem der Ansprüche 1 bis 10, **dadurch gekennzeichnet, dass** die US-Sender einer Gruppe nie gleichzeitig senden.

12. Verfahren nach einem der Ansprüche 7 bis 11, **dadurch gekennzeichnet, dass** der Austausch von Funksignalen innerhalb eines definierten Zeitfensters erfolgt.

## Claims

1. Method for identifying and locating objects within a defined area,
wherein ultrasonic signals are transmitted at predetermined transmission times by one or more ultrasonic transmitters (30-32) sited at fixed locations within the area,
wherein the transmitted ultrasonic signal is received by an ultrasonic receiver (11) of a component (10) arranged in or on the object,
wherein a reception time is assigned to the received ultrasonic signal in the object-related component (10),
wherein the determined reception time is transmitted together with an object identifier via a wireless communication system (14; 23; 24) to a central component (20),
wherein a radio communication system is used as the wireless communication system, with an exchange of radio signals between a radio transceiver (14) arranged in the object-related component and a fixed radio transceiver (23, 24) connected to the central component,
wherein the transit time of the ultrasonic signal is determined in the object-related component (10) and/or in the central component (20) from the transmission time and the assigned reception time, wherein the distance between the ultrasonic transmitter and the ultrasonic receiver of the object is determined from the transit time of the ultrasonic signal,
wherein the position of the ultrasonic receiver (11) and hence that of the object is determined by known methods from the distances determined,
wherein the ultrasonic transmitters are divided into two or more groups, with all ultrasonic transmitters within a group transmitting on a specific transmission frequency (f1; f2),
**characterized in that** for a rough determination of the location of an object-related component on the part of the central component the reception field strength of the radio signals received from the object-related radio transmitters is determined and **in that** for each group a different transmission frequency from that of the adjacent group is used for the ultrasonic transmitters and **in that** moreover a discrimination is made between adjacent groups of ultrasonic transmitters by measuring the frequency of the ultrasonic signals received in the object-related ultrasonic receiver (11).

2. Method according to Claim 1, **characterized in that** an ultrasonic signal is transmitted at a predetermined transmission time by each of a plurality of ultrasonic transmitters (30-32) sited at fixed locations within the area, and a two- or three-dimensional determination of the object's position is carried out.

3. Method according to either of Claims 1 and 2, **characterized in that** the transmission times for the ultrasonic signals of the individual ultrasonic transmitters (30-32) are controlled by the central component (20).

4. Method according to any one of Claims 1 to 3, **characterized in that** a radio signal is transmitted by one of the fixed radio transceivers simultaneously with the ultrasonic signals, the transit time measurement for the transmitted ultrasonic signals being initiated by the reception of the radio signal in the object-related component.

5. Method according to any one of Claims 1 to 4, **characterized in that** the central component and the object-related component each have a time base (22; 13), and these time bases are continuously synchronized with each other.

6. Method according to Claim 5, **characterized in that** the time bases (22; 13) are synchronized via the wireless communication system.

7. Method according to either of Claims 5 and 6, **characterized in that** transmission of the ultrasonic signals is effected in a constantly repeating cycle, the cycle being divided into a number of time windows and each ultrasonic transmitter being assigned a time window for transmission of its ultrasonic signal.

8. Method according to any one of Claims 5 to 7, **characterized in that** the synchronization of the time bases is effected within a specific time window.

9. Method according to any one of Claims 5 to 8, **characterized in that** the ultrasonic signals received by the ultrasonic receiver are assigned to the respective ultrasonic transmitter by reference to the time window prevailing at the time of their reception.

10. Method according to any one of Claims 5 to 9, **characterized in that** only the first ultrasonic signal to be received within a time window is evaluated by the ultrasonic receiver.

11. Method according to any one of Claims 1 to 10, **characterized in that** the ultrasonic transmitters within a group never transmit simultaneously.

12. Method according to any one of Claims 7 to 11, **characterized in that** the exchange of radio signals is effected within a defined time window.

## Revendications

1. Procédé pour identifier et localiser des objets à l'intérieur d'une zone limitée,
selon lequel au moins un émetteur d'ultrasons (30-32) disposé fixe à l'intérieur de la zone émet un signal ultrasonore à un moment d'émission prédéfini,
le signal ultrasonore émis est reçu par un récepteur d'ultrasons (11) d'un composant (10) disposé dans/sur l'objet,
un moment de réception est affecté, dans le composant (10) relatif à l'objet, au signal ultrasonore reçu,
le moment de réception déterminé est transmis, avec une caractéristique d'identification de l'objet, à un composant central (20) par l'intermédiaire d'un système de communication sans fil (14 ; 23 ; 24),
on utilise comme système de communication sans fil un système de communication radio, des signaux radio étant échangés entre un émetteur/récepteur radio (14) disposé dans le composant relatif à l'objet et un émetteur/récepteur radio fixe (23, 24) relié au composant central,
dans le composant (10) relatif à l'objet et/ou dans le composant central (20), la durée de propagation du signal ultrasonore est déterminée à partir du moment d'émission et du moment de réception affecté,
à partir de la durée de propagation du signal ultrasonore est déterminée la distance entre l'émetteur d'ultrasons et l'émetteur d'ultrasons de l'objet,
à partir des distances déterminées, la position du récepteur d'ultrasons (11) et, ainsi, de l'objet est déterminée à l'aide de méthodes connues,
les émetteurs d'ultrasons sont disposés en deux groupes ou plus, tous les émetteurs d'ultrasons d'un même groupe émettant sur une fréquence d'émission définie (f1 ; f2),
**caractérisé en ce que** pour une localisation approximative d'un composant relatif à l'objet du côté du composant central l'intensité de champ de réception des signaux radio reçus par les émetteurs radio relatifs à l'objet est définie, et **en ce que** pour chaque groupe une fréquence d'émission différente de celle du groupe voisin est utilisée pour les émetteurs d'ultrasons, et **en ce qu'**à l'aide d'une mesure de fréquence des signaux ultrasonores reçus dans le récepteur d'ultrasons (11) relatif à l'objet, une distinction est faite en supplément entre les groupes voisins d'émetteurs d'ultrasons.

2. Procédé selon la revendication 1, **caractérisé en ce que** plusieurs émetteurs d'ultrasons (30-32) disposés fixes à l'intérieur de la zone émettent chacun à un moment d'émission prédéfini un signal ultrasonore, et une localisation bidimensionnelle ou tridimensionnelle de l'objet est réalisée.

3. Procédé selon l'une des revendications 1 ou 2, **caractérisé en ce que** les moments d'émission pour les signaux ultrasonores des émetteurs d'ultrasons (30-32) individuels sont commandés par le composant central (20).

4. Procédé selon l'une des revendications 1 à 3, **caractérisé en ce qu'**en même temps que les signaux ultrasonores, un signal radio est émis par l'un des émetteurs/récepteurs radio fixes, la mesure du temps de propagation pour les signaux ultrasonores émis démarrant grâce à la réception du signal radio dans le composant relatif à l'objet.

5. Procédé selon l'une des revendications 1 à 4, **caractérisé en ce que** le composant central et le composant relatif à l'objet présentent des bases de temps (22 ; 13) respectives qui sont synchronisées de manière continue.

6. Procédé selon la revendication 5, **caractérisé en ce que** la synchronisation des bases de temps (22 ; 13) se fait par l'intermédiaire du système de communication sans fil.

7. Procédé selon l'une des revendications 5 ou 6, **caractérisé en ce que** l'émission des signaux ultrasonores se fait dans un cycle qui se répète sans cesse, étant précisé que le cycle est divisé en plusieurs intervalles de temps et qu'à chaque émetteur d'ultrasons est affecté un intervalle de temps à l'intérieur duquel il émet son signal ultrasonore.

8. Procédé selon l'une des revendications 5 à 7, **caractérisé en ce que** la synchronisation des bases de temps se fait à l'intérieur d'un intervalle de temps défini.

9. Procédé selon l'une des revendications 5 à 8, **caractérisé en ce que** les signaux ultrasonores reçus par le récepteur d'ultrasons sont affectés à l'émetteur respectif à l'aide de l'intervalle de temps qui est valable au moment de la réception.

10. Procédé selon l'une des revendications 5 à 9, **caractérisé en ce que** le récepteur d'ultrasons n'analyse que le signal ultrasonore qui est reçu en premier à l'intérieur d'un intervalle de temps.

11. Procédé selon l'une des revendications 1 à 10, **caractérisé en ce que** les émetteurs d'ultrasons d'un même groupe n'émettent jamais en même temps.

12. Procédé selon l'une des revendications 7 à 11, **caractérisé en ce que** l'échange de signaux radio se fait à l'intérieur d'un intervalle de temps défini.
